# EUROPÄISCHE PATENTSCHRIFT

(11) **EP 1 250 501 B1**
(45) Veröffentlichungstag und Bekanntmachung des Hinweises auf die Patenterteilung: **10.09.2008**
(21) Anmeldenummer: 01946916.2
(22) Anmeldetag: 25.01.2001
(51) Int. Cl.: E04F 11/18, F16B 7/18, F16B 31/02

(54) **VERBINDUNGSSTÜCK FÜR ROHRARTIGE ELEMENTE, INSBESONDERE HANDLÄUFE**
CONNECTING ELEMENT FOR TUBULAR ELEMENTS, ESPECIALLY HANDRAILS
PIECE DE RACCORDEMENT POUR ELEMENTS TUBULAIRES, NOTAMMENT POUR MAINS COURANTES

(30) Priorität: 27.01.2000 DE 20001350 U
(43) Veröffentlichungstag der Anmeldung: 23.10.2002
(73) Patentinhaber: Vormann GmbH & Co. KG, 04910 Elsterwerda (DE)
(72) Erfinder: KUKATSCH, Eckhard, 58339 Breckerfeld (DE)
(74) Vertreter: Ludewig, Karlheinrich
(86) Internationale Anmeldenummer: PCT/EP2001/000805
(87) Internationale Veröffentlichungsnummer: WO 2001/055528

(56) Entgegenhaltungen:
- US-A- 5 658 017
- US-A- 5 772 252

## Beschreibung

Die Erfindung bezieht sich auf ein Verbindungselement der im Oberbegriff von Anspruch 1 genannten Art. Derartige Verbindungselemente werden eingesetzt zur Verbindung von rohrartigen Elementen, bei denen kein Medienfluß durch die Rohre vorgesehen ist, wie z. B. bei Handläufen eines Geländers. Die rohrartige Ausbildung einzelner Handlaufelemente ist vielmehr auf die damit verbundene Material- und Gewichtseinsparung sowie die erhöhte Stabilität zurückzuführen. Dabei stellt sich das Problem, die einzelnen Handlaufelemente möglichst nicht an die jeweiligen Gebäudegegebenheiten individuell anpassen zu müssen, sondern vorgefertigte, normierte Elemente verwenden zu können, die je nach Bedarf miteinander verbunden werden können. Diese Verbindungen müssen aus Sicherheitsgründen ausgesprochen belastbar sein, da zum Teil große Kräfte auf sie wirken. Aus ästhetischen Gründen sollen die Verbindungselemente im Montageendzustand möglichst nicht sichtbar sein.

Dies führte in der Vergangenheit zu Verbindungselementen, die wenigstens bereichsweise in die Rohre der Handläufe einsteckbar und dort auf verschiedene Weise, z. B. durch Verschrauben, Verklemmen, Verrasten etc., festlegbar waren. Solche Verbindungselemente weisen in der Regel ein Zentralgewinde auf, in welches ein Gewindebolzen des benachbarten Handlaufelements bzw. eines Übergangselementes eindrehbar ist. Dieser Stand der Technik weist den erheblichen Nachteil auf, daß die verbundenen Elemente nach dem Festziehen des Gewindebolzens nicht mehr gegeneinander rotationsbeweglich sind. Dies führt zu Schwierigkeiten bei der Anpassung des Geländers an die individuelle Strukturen eines Gebäudes. Um, insbesondere bei winklig miteinander verbundenen Handlaufelementen die volle Anpaßbarkeit an Gebäudestrukturen zu gewährleisten, müssen die gattungsbildenden Verbindungselemente auch nach dem Festziehen des Gewindebolzens lösbar, einstellbar und von außen wieder festlegbar gestaltet sein. Die Möglichkeit eines Zugriffs von außen erfordert jedoch stets von außen sichtbare Elemente, was, wie bereits erwähnt, aus ästhetischen Gründen nicht wünschenswert ist. Eine besonders kleine, unauffällige Gestaltung der von außen sichtbaren Elemente, würde sich jedoch in verringerter Belastbarkeit, d. h. geringerer Sicherheit niederschlagen.

Aufgabe der vorliegenden Erfindung ist es, ein Verbindungselement der oben genannten Art zu schaffen, das eine sichere, jedoch rotationsbewegliche und somit optimal an Gebäudestrukturen anpaßbare Verbindung zwischen Handlaufelementen ermöglicht. Die Verbindungselemente sollten darüber hinaus von außen praktisch nicht sichtbar sein.

Diese Aufgabe wird gelöst durch die Merkmale des kennzeichnenden Teils von Anspruch 1. Diesen kommt im Einzelnen folgende Bedeutung zu. Der in die Rohröffnung eines Handlaufelementes einzuführende Einsatz ist wenigstens zweiteilig ausgebildet. Eine äußere Haltebuchse wird in dem zu verbindenden Rohr festgelegt. Die Festlegung kann durch Verklemmen, Verschrauben, Verrasten oder ähnliches erfolgen. In die Haltebuchse ist ein inneres Gegenstück eingesetzt, das seinerseits wenigstens drei funktionell unterschiedliche Bereiche aufweist. In einem vorderen, der Verbindungsstelle zugewandten Bereich ist ein Innengewinde vorgesehen, in welches der Gewindebolzen des benachbarten Handlauf- oder Übergangselementes eingedreht werden kann. Der vordere Bereich selbst ist dabei nicht an der Haltebuchse festgelegt. Diese Festlegung erfolgt vielmehr über einen hinteren Bereich des Gegenstücks. Hier kann z. B. eine Preßpassung oder ein Gewinde vorgesehen sein, dessen Orientierung vorzugsweise der Orientierung des Gewindes im vorderen Bereich entgegengesetzt ist. Entscheidend ist es, das Gegenstück mit seinem hinteren Bereich so an der Haltebuchse festzulegen, daß der Gewindebolzen des benachbarten Handlauf- oder Übergangselementes in das Gewinde des vorderen, selbst nicht an der Haltebuchse festgelegten Bereiches des Gegenstückes festgeschraubt werden kann. Besonders sinnvoll ist es dabei, das Gewinde im vorderen Bereich des Gegenstücks in eine Bohrung auslaufen zu lassen, deren Durchmesser in etwa dem Gewindekerndurchmesser entspricht. In diesem Sinne bedeutet "festschrauben" des Gewindebolzens einen Übergang vom reinen Formschluß zu einer form- und kraftschlüssigen Verbindung. Die Festlegung des hinteren Bereiches des Gegenstücks an der Haltebuchse muß entsprechend stark ausgelegt sein, um die auftretenden Kräfte zu kompensieren.

Erfindungsgemäß ist zwischen dem vorderen und hinteren Bereich des Gegenstücks ein besonderer Übergangsbereich vorgesehen, der bei Einwirkung erhöhter Torsionskraft an wohldefinierter Stelle bricht. Die Sollbrucheigenschaft des Übergangsbereiches kann z. B. durch besonders dünne Materialstärke, Preforationen oder ähnliches realisiert werden. Bricht nämlich der Übergangsbereich nachdem der Gewindebolzen im vorderen Teil des Gegenstücks festgeschraubt ist, wird dessen feste Verbindung mit der Haltebuchse gelöst. Gleichzeitig bleibt der vordere Teil des Gegenstücks fest mit dem Gewindebolzen verbunden. Die Rotationsbeweglichkeit der beiden verbundenen Handlaufelemente ist so wieder hergestellt. Eine axialen Beweglichkeit wird jedoch durch den fest auf dem Gewindebolzen sitzenden und als Verdickung wirkenden vorderen Teil des Gegenstücks wirksam verhindert, sofern die Öffnung in der Stirnseite der Haltebuchse, durch welche der Gewindebolzen eingeführt wurde, kleiner ist als der Durchmesser dieses vorderen Gegenstück-Bereiches. Auf diese Weise wird eine axial stabile aber rotationsbewegliche Verbindung zwischen zwei Handlaufelementen realisiert.

Besonders vorteilhaft ist es, zwischen der Haltebuchse und dem Gegenstück eine Ausgleichsfeder vorzusehen, die fertigungsbedingte Axialtoleranzen ausgleicht. Auf diese Weise lassen sich die einzelnen Elemente mit größeren Fertigungstoleranzen, d. h. kostengünstiger, herstellen, ohne daß aufgrund einer verbleibenden axialen Restbeweglichkeit der Eindruck einer unsicheren Verbindung entsteht.

Weitere Vorteile ergeben sich aus den übrigen Unteransprüchen, der speziellen Beschreibung sowie den Zeichnungen. Es zeigen
- Fig. 1: eine Explosionsdarstellung einer besonders vorteilhaften Ausführungsform des erfindungsgemäßen Verbindungselementes,
- Fig. 2: einen Schnitt durch die Haltebuchse,
- Fig. 3: eine Draufsicht auf die Haltebuchse gemäß Richtungspfeil III in Fig. 2.

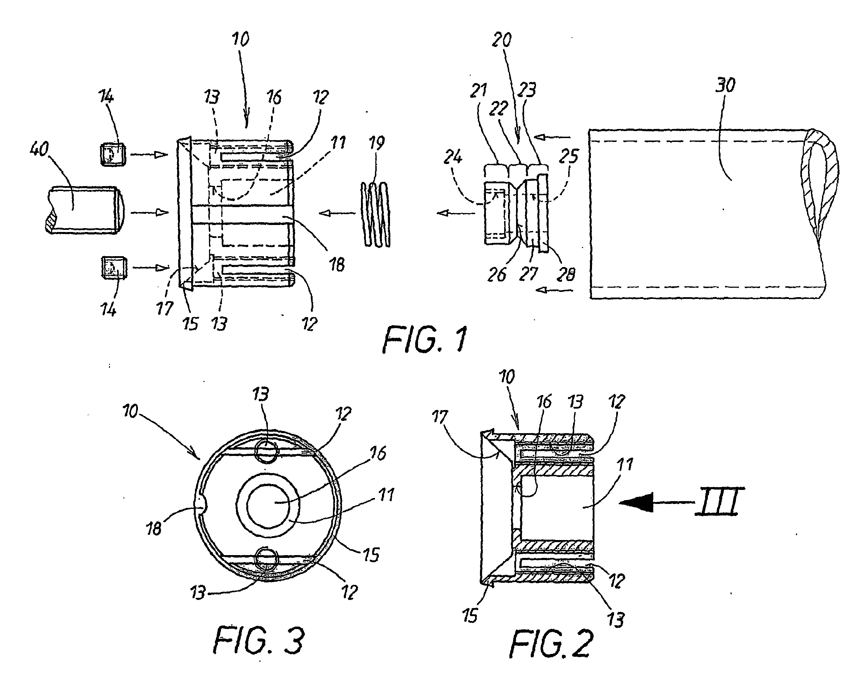

Die Fign. 1-3 zeigt eine besonders vorteilhafte Ausführungsform eines erfindungsgemäßen Verbindungselementes sowie Bereiche der anschließenden, zu verbindenden Handlauf- bzw. Übergangselemente in übersichtlicher Explosionsdarstellung. Das eigentliche Verbindungselement besteht aus der Haltebuchse 10 und dem Gegenstück 20. Mit dem Bezugszeichen 30 ist ein rohrartiges Handlaufelement bezeichnet. Aufgabe des erfindungsgemäßen Verbindungselementes ist es, das erste Handlaufelement 30 mit einem zweiten Handlauf- oder Übergangselement zu verbinden, von welchem lediglich Teile eines Gewindebolzens 40 dargestellt sind. Denkbar ist, daß der Gewindebolzen 40 in dem zweiten Handlauf- oder Übergangselement durch Klemm- oder Schraubvorrichtungen bekannter Art oder auf sonstige Weise festgelegt ist. Der Gewindebolzen 40 kann jedoch auch Teil eines besonderen Übergangselementes, z. B. eines Kugelgelenkelementes sein. Vor der Montage des Handlaufs wird das Gegenstück 20 in die Aufnahmekammer 11 der Haltebuchse 10 eingebracht. Die Festlegung erfolgt dabei über den hinteren Bereich 23 des Gegenstücks 20. In der in Fig. 1 dargestellten Ausführungsform ist hierzu eine Preßpassung 27 vorgesehen. Ein Flansch 28 definiert die Einführtiefe in die Aufnahmekammer 11.

Der vordere Bereich 24 des Gegenstücks 20 weist einen geringfügig kleineren Durchmesser auf, so daß hier keine direkte Festlegung an der Haltbuchse 10 erfolgt. Das Gegenstück 20 ist von einer Durchgangsbohrung durchsetzt, die im vorderen Bereich 21 ein Innengewinde 24 aufweist. Das Gewinde 24 ist dem Gewinde des Gewindebolzens 40 angepaßt. Ist das Gegenstück 20 in der Aufnahmekammer 11 der Haltebuchse 10 festgelegt, kann der gesamte Einsatz in das rohrartige Handlaufelement 30 eingebracht werden. Ein Flansch 15 legt dabei vorzugsweise eine definierte Einführtiefe fest. Die Festlegung des Einsatzes 10/20 im Rohr 30 erfolgt in dem gezeigten Ausführungsbeispiel durch Verklemmen. Hierzu sind in der Haltebuchse 10 radial außen und axial hinten Spreizschlitze 12 vorgesehen. Diese werden von Gewindebohrungen 13 durchsetzt, in welche Madenschrauben 14 einschraubbar sind. Durch Einführen der Madenschrauben 14 erfolgt eine Spreizung der Spreizschlitze 12, was zu einer kraftschlüssigen Festlegung der Haltebuchse im Rohr 30 führt. Um eventuell im Rohrinneren vorhandene Schweißnähte ausgleichen zu können, ist es vorteilhaft, eine entsprechende axiale Nut 18 in der Haltebuchse 10 vorzusehen..

Nach Festlegung des Einsatzes 10/20 in dem Rohr 30 wird das benachbarte Handlauf- bzw. Übergangselement angeschlossen, indem sein Gewindebolzen 40 durch die Durchgangsbohrung 16 in die Aufnahmekammer 11 der Haltebuchse 10 eingeführt und in das Gewinde 24 im vorderen Bereich 21 des Gegenstücks 20 eingeschraubt wird. Vorteilhafterweise sind die Durchmesser des Gewindes 24 und der Anschlußbohrung 25 so gewählt, daß die rein formschlüssige Verbindung der Gewinde 24 und 40 in eine kraftschlüssige Verbindung übergeht. Der Gewindebolzen ist dann festgeschraubt. Weitere Einwirkung von Torsionskräften führt zum vorgesehenen Bruch des Gegenstücks 20 im Bereich 22, insbesondere an der Sollbruchfläche 26. Der vordere Bereich 21, der durch den Kraftschluß der Gewinde 24 und 40 fest mit dem Gewindebolzen 40 verbunden ist, steht nun nicht mehr in fester Verbindung mit der Haltebuchse 10. Die verbundenen Handlaufelemente sind somit gegeneinander rotationsbeweglich. Eine relative axiale Beweglichkeit der verbundenen Handlaufelemente ist jedoch nicht möglich, da der Durchmesser der Durchgangsbohrung 16, die die Aufnahmekammer 11 der Haltebuchse 10 nach vorne begrenzt, kleiner ist als der Durchmesser des vorderen Bereichs 21 des Gegenstücks 20. Lediglich eine sehr geringfügige, durch Fertigungstoleranzen bedingte, axiale Beweglichkeit ist noch gegeben. Bei dem in Fig. 1 gezeigten Ausführungsbeispiel wird diese Restbeweglichkeit jedoch zuverlässig unterbunden durch den Einsatz der Ausgleichsfeder 19, die die verbundenen Elemente im Rahmen der Toleranzen ineinander zieht.

Auf diese Art verbundene Handläufe können beliebig den Winkeln individueller Gebäudestrukturen angepaßt werden, ohne daß ihre Sicherheit darunter litte.

Neben der in den Fig. 1-3 gezeigten Ausführungsform sind eine Vielzahl von Varianten denkbar, die sämtlich von dem Erfindungsgedanken Gebrauch machen. Beispielsweise kann die Festlegung des Gegenstücks 20 in der Aufnahmekammer 11 der Haltebuchse 10 durch Einschrauben erfolgen. Statt der Preßpassung 27 ist dann ein Außengewinde vorzusehen, das in ein entsprechendes Innengewinde der Aufnahmekammer 11 eingeschraubt werden kann. Die Orientierung des Gewindes ist dabei vorzugsweise derjenigen des Gewindes 24 entgegengesetzt. Auf diese Weise wird erreicht, daß beim Festziehen des Gewindebolzens 40 die Festlegung des Gegenstücks 20 in der Haltebuchse 10 nicht gelöst wird.

Der Sollbruchbereich 22 des Gegenstücks 20 ist in der gezeigten Ausführungsform durch einen Bereich verringerter Materialstärke realisiert, der eine exakte, ringförmige Sollbruchfläche definiert. Jegliche sonstige das Material lokal auf definierte Weise schwächende Maßnahme ist jedoch ebenso anwendbar. Beispielsweise könnte ein Kranz von Bohrungen vorgesehen werden.

Auch die Festlegung der Haltebuchse 10 in dem Rohr 30 muß nicht in der erläuterten Weise durch Verklemmen erfolgen. Eine Schraub- oder Rastverbindung ist ebenso denkbar. Das Gewinde ist dabei vorzugsweise in gleicher Richtung wie der Gewindebolzen 40 orientiert. Nachteilig hierbei ist jedoch die aufwendigere Fertigung der Rohre 30, in die Innengewinde geschnitten werden müßten.

Bei der gezeigten Ausführungsform ist die vordere Stirnfläche der Haltebuchse mit einer pfannenartigen Vertiefung 17 versehen. Dies ist besonders vorteilhaft, wenn kugelartige Übergangs- oder Endstücke mit ihrem Gewindebolzen 40 an das Rohrelement 30 angeschlossen werden sollen.

Der Gewindebolzen 40 des gezeigten Ausführungsbeispiels kann zu einem im wesentlichen zylindrischen Bolzen mit seitlichen Stiften reduziert gedacht werden, die nach Art eines Bajonettverschlusses in ein auf weniger als einen einzelnen Gewindegang reduziertes Innengewinde 24 eingreifen. Auch bei dieser Ausführungsform kann der vorteilhafte Übergang vom Form- zum Kraftschluß durch bekannte Maßnahmen ermöglicht werden.

Auch der Anwendungsbereich der Erfindung ist nicht auf Handläufe beschränkt. Vielmehr eignen sich die erfindungsgemäßen Verbindungselemente zur Verbindung jeglicher Art von wenigstens bereichsweise rohrartigen und nicht medienführenden Elementen.

### Bezugszeichenliste:

- 10: Haltebuchse
- 11: Aufnahmekammer in 10 für 20
- 12: Spreizspalt
- 13: Spreizgewinde
- 14: Madenschraube
- 15: Flansch
- 16: Durchgangsbohrung
- 17: Aufnahmepfanne
- 18: Nut
- 19: Ausgleichsfeder
- 20: Gegenstück
- 21: vorderer Bereich von 20
- 22: Übergangsbereich zwischen 21 und 23
- 23: hinterer Bereich von 20
- 24: Gewinde
- 25: Anschlußbohrung
- 26: Sollbruchfläche
- 27: Preßpassung
- 28: Flansch
- 30: rohrartiger Handlauf
- 40: Gewindebolzen

## Patentansprüche

1. Verbindungselement zur axialen oder gewinkelten Verbindung eines wenigstens in seinem Endbereich rohrartigen, ersten Elementes (30) mit einem einen Gewindebolzen (40) aufweisenden, weiteren Element, beide insbesondere als Teile von Handläufen,
umfassend einen in den Endbereich des ersten Elementes (30) einsetzbaren Einsatz (10/20), in den der Gewindebolzen (40) des weiteren Elementes einschraubbar ist, wobei der Einsatz (10/20) im Endbereich des ersten Elementes (30) in dessen Innerem festlegbar ist,
**dadurch gekennzeichnet, daß**
der Einsatz (10/20) wenigstens zweiteilig ausgebildet ist, nämlich bestehend aus einer äußeren Haltebuchse (10) mit einer inneren Aufnahmekammer (11), und darin einem Gegenstück (20) mit einem vorderen und einem hinteren Bereich (21, 23),
von denen der vordere Bereich (21) ein Innengewinde (24) zur Aufnahme des Gewindebolzens (40) trägt und einen die Weite der vorderen Öffnung (16) der Aufnahmekammer (11) überragenden Außendurchmesser aufweist
und von denen der hintere Bereich (23) Mittel (27) zur Festlegung des Gegenstücks (20) an der Haltebuchse (10) aufweist,
wobei beide Bereiche (21, 23) über einen bei Einwirkung erhöhter Torsionskraft brechenden Übergangsbereich (22) verbunden sind.

2. Verbindungselement nach Anspruch 1, **dadurch gekennzeichnet, daß** sich an das Innengewinde (24) eine Anschlußbohrung (25) anschließt, deren Durchmesser in etwa dem Gewindekerndurchmesser entspricht.

3. Verbindungselement nach einem der Ansprüche 1 und 2, **dadurch gekennzeichnet, daß** der Gewindebolzen (40) und das korrespondierende Gewinde (24) nach Art eines Bajonettverschlusses zusammenwirken.

4. Verbindungselement nach einem der Ansprüche 1 bis 3, **dadurch gekennzeichnet, daß** der hintere Bereich (23) des Gegenstücks (20) einen zylindrischen Teilbereich (27) aufweist, der in eine korrespondierende Ausnehmung der Haltebuchse (10) kraftschlüssig einpreßbar ist.

5. Verbindungselement nach einem der Ansprüche 1 bis 3, **dadurch gekennzeichnet, daß** der hintere Bereich (23) des Gegenstücks (20) ein Außengewinde aufweist, mit welchem es in einem korrespondierenden Innengewinde der Haltebuchse (10) festlegbar ist und das zu dem den Gewindebolzen (40) aufnehmenden Innengewinde (24) des vorderen Bereiches (21) des Gegenstücks (20) gegensinnig orientiert ist.

6. Verbindungselement nach einem der Ansprüche 1 bis 5, **dadurch gekennzeichnet, daß** der bei erhöhter Torsionsbelastung brechenden Übergangsbereich (22) eine wesentlich geringere Materialstärke aufweist als der vordere (21) und der hintere (23) Bereich des Gegenstücks (20).

7. Verbindungselement nach einem der Ansprüche 1 bis 6, **dadurch gekennzeichnet, daß** die Haltebuchse (10) in ihrem radial äußeren und axial hinteren Bereich bogensehnenartige Schlitze (12) aufweist, die durch Eindrehen von Schrauben, insbesondere von Madenschrauben (14), in Innengewinde (13), die in den Schlitzen (12) vorgesehen sind, spreizbar sind.

8. Verbindungselement nach einem der Ansprüche 1 bis 7, **dadurch gekennzeichnet, daß** die Haltebuchse (10) an ihrer vorderen Stirnfläche eine pfannenartige Vertiefung (17) zur Aufnahmne eines kugelausschnittförmigen Bereichs des zu verbindenden, weiteren Elementes aufweist.

9. Verbindungselement nach einem der Ansprüche 1 bis 8, **dadurch gekennzeichnet, daß** das Gegenstück (20) gegen die Haltebuchse (10) federbelastet ist.

10. Verbindungselement nach einem der Ansprüche 1 bis 9, **dadurch gekennzeichnet, daß** die Haltebuchse (10) in ihrer äußeren Oberfläche eine sich in axialer Richtung erstreckende Nut (18) aufweist.

## Claims

1. Connecting element for the axial or angled connection of a first element (30), which is tubular at least in its end area, to a further element which has a threaded pin (40), with both in particular being parts of handrails,
having an insert (10/20) in the end area of the first element (30), into which the threaded pin (40) of the other element can be screwed, with the insert (10/20) being fixable in the inside of the first element (30) in the end area of said first element (30),
**characterized in that**
the insert (10/20) is designed as at least a two-part component, i.e. consisting of an outer retaining socket (10) with an inner receiving chamber (11) and a counterpart section (20) with a front and rear area (21, 23) within the receiving chamber (11),
with the counterpart section (20) having an internal thread (24) in its front area (21) for receiving a threaded pin (40) and having an external diameter projecting beyond the width of the front opening (16) of the receiving chamber (11)
and with the rear area (23) of said counterpart section (20) having means (27) for fixing the counterpart section (20) on the retaining socket (10), with both areas (21, 23) being connected by a transition area (22) which fractures when subjected to an increased torsional force.

2. Connecting element according to Claim 1, **characterized in that** a connecting bore (25), whose diameter corresponds approximately to the core diameter of the thread, is attached to the internal thread (24).

3. Connecting element according to one of Claims 1 and 2, **characterized in that** the threaded pin (40) and the corresponding thread (24) interact as a type of bayonet connection.

4. Connecting element according to one of Claims 1 to 3, **characterized in that** the rear area (23) of the counterpart section (20) has a cylindrical part area (27) which can be pressed into a corresponding recess in the retaining socket (10) to form an interference fit.

5. Connecting element according to one of Claims 1 to 3, **characterized in that** the rear area (23) of the counterpart section (20) has an external thread by means of which it can be fixed in a corresponding internal thread of the retaining socket (10), and which has an orientation in the opposite direction to the internal thread (24) receiving the threaded pin (40), of the front area (21) of the counterpart section (20).

6. Connecting element according to one of Claims 1 to 5, **characterized in that** the transition area (22), which fractures when exposed to increased torsional stress, has a substantially smaller material thickness than the front (21) and the rear (23) areas of the counterpart section (20).

7. Connecting element according to one of Claims 1 to 6, **characterized in that** the retaining socket (10) has bowstring-type slots (12) in its radial outer and axial rear areas, which can be spread by screwing in screws, especially grub screws (14) into the internal threads (13) provided in the slots (12).

8. Connecting element according to one of Claims 1 to 7, **characterized in that** the retaining socket (10) has a pan-shaped recess (17) in its front face to receive a spherical section-shaped area of the other element to be connected.

9. Connecting element according to one of Claims 1 to 8, **characterized in that** the counterpart section (20) is spring loaded against a retaining socket (10).

10. Connecting element according to one of Claims 1 to 9, **characterized in that** the retaining socket (10) has a groove (18) extending in an axial direction in its outer surface.

## Revendications

1. Pièce de raccordement permettant le raccordement axial ou coudé d'un premier élément (30) tubulaire au moins dans sa zone terminale, avec un autre élément présentant un goujon fileté (40), tout deux étant notamment des pièces constitutives de mains courantes,
comprenant un insert (10/20) introductible dans la zone terminale du premier élément (30), insert dans lequel il est possible de visser le goujon fileté (40) de l'autre élément, l'insert (10/20) se laissant immobiliser dans la zone terminale du premier élément (30), à l'intérieur de celui-ci,
**caractérisé en ce que**
l'insert (10/20) est configuré au moins en deux parties, à savoir en une douille extérieure (10) de retenue avec une chambre réceptacle (11) intérieure, et dedans une pièce antagoniste (20) comportant une zone avant et une zone arrière (21, 23),
zones dont la zone avant (21) comporte un taraudage (24) servant recevoir le goujon fileté (40) et présente un diamètre extérieur dépassant le calibre de l'orifice avant (16) de la chambre réceptacle (11)
et dont la zone arrière (23) comporte des moyens (27) destinés à immobiliser la pièce antagoniste (20) contre la douille de retenue (10),
les deux zones (21, 23) étant reliées entre elles par une zone de transition (22) qui casse en cas d'application d'une force de torsion accrue.

2. Pièce de raccordement selon la revendication 1, **caractérisée en ce qu'**un alésage de raccordement (25) suit le taraudage (24), alésage dont le diamètre équivaut approximativement au diamètre du fond de filet.

3. Pièce de raccordement selon l'une des revendications 1 et 2, **caractérisée en ce que** le goujon fileté (40) et le filetage correspondant (24) interagissent à la manière d'une fermeture à baïonnettes.

4. Pièce de raccordement selon l'une des revendications 1 à 3, **caractérisée en ce que** la zone arrière (23) de la pièce antagoniste (20) présente une partie cylindrique (27) enfonçable par adhérence de forces dans un évidement correspondant de la douille de retenue (10).

5. Pièce de raccordement selon l'une des revendications 1 à 3, **caractérisée en ce que** la zone arrière (23) de la pièce antagoniste (20) présente un filetage extérieur permettant d'immobiliser ladite pièce dans un taraudage correspondant de la douille de retenue (10), et **en ce qu'**elle est orientée en sens opposé au taraudage (24), recevant le goujon fileté (40), de la zone avant (21) de la pièce antagoniste (20).

6. Pièce de raccordement selon l'une des revendications 1 à 5, **caractérisée en ce que** la zone de transition (22), cassant lorsque la contrainte en torsion augmente, présente une épaisseur de matière nettement plus faible que la zone avant (21) et la zone arrière (23) de la pièce antagoniste (20).

7. Pièce de raccordement selon l'une des revendications 1 à 6, **caractérisée en ce que** la douille de retenue (10) présente, dans sa zone radiale extérieure et axiale arrière, des fentes (12) en forme de corde d'arc, fentes qu'il est possible d'expanser en vissant des vis, notamment des vis sans tête (14), dans les taraudages (13) qui ont été prévus dans les fentes (12).

8. Pièce de raccordement selon l'une des revendications 1 à 7, **caractérisée en ce que** la douille de retenue (10) présente, contre sa surface frontale avant, un creux (17) du type de celui d'une poêle, destiné à recevoir une zone en forme de secteur sphérique de l'autre élément à relier.

9. Pièce de raccordement selon l'une des revendications 1 à 8, **caractérisée en ce que** la pièce antagoniste (20) est maintenue par contrainte ressort contre la douille de retenue (10).

10. Pièce de raccordement selon l'une des revendications 1 à 9, **caractérisée en ce que** la douille de retenue (10) présente, dans sa surface extérieure, une gorge (18) s'étendant dans le sens axial.
